Europäisches Patentamt

European Patent Office

Office européen des brevets

(19)

(11) **EP 0 976 883 B1**

(12) **FASCICULE DE BREVET EUROPEEN**

(45) Date de publication et mention
de la délivrance du brevet:
**17.09.2003 Bulletin 2003/38**

(51) Int Cl.⁷: **E04B 1/86**, E04C 2/36,
G10K 11/172, B32B 3/12

(21) Numéro de dépôt: **99401748.1**

(22) Date de dépôt: **12.07.1999**

(54) **Structure de nid d'abeille notamment pour absorption du son et son procédé de fabrication**

Schalldämmende Wabenstruktur und Herstellungsverfahren

Sound absorbing honeycomb structure and method of production

(84) Etats contractants désignés:
**DE FR GB**

(30) Priorité: **30.07.1998 FR 9809743**

(43) Date de publication de la demande:
**02.02.2000 Bulletin 2000/05**

(73) Titulaire: **Hurel-Hispano Le Havre**
**76700 Gonfreville l'Orcher (FR)**

(72) Inventeurs:
• **Gonidec, Patrick**
**76290 Montvilliers (FR)**

• **Treger, Jean Adam Roger**
**76290 Fontaine la Mallet (FR)**

(74) Mandataire: **Berrou, Paul**
**Snecma Moteurs**
**Propriété Intellectuelle**
**B.P. 81**
**91003 Evry Cédex (FR)**

(56) Documents cités:
**WO-A-92/12856**     **FR-A- 2 261 872**
**FR-A- 2 660 787**     **US-A- 4 265 955**
**US-A- 5 785 919**

EP 0 976 883 B1

# Description

Cette invention concerne une structure de nid d'abeille selon le préambule de la revendication 1, qui convient principalement pour la construction de panneaux insonorisants, ainsi qu'à son procédé de fabrication.

Une telle structure est connue par exemple du document FR-A-2261 872.

Une structure insonorisante connue se présente sous l'aspect d'un panneau composé de cellules de nid d'abeille intercalées entre une plaque pleine et une plaque perforée par laquelle les cellules s'ouvrent vers le milieu bruyant : les ondes sonores se propagent dans les cellules en passant par les perforations et y sont absorbées par des réflexions successives sur les parois sans guère pouvoir en ressortir. Cette structure est ce qu'on appelle un résonateur de Helmholtz.

Il est possible d'empiler deux couches de telles cellules en intercalant une tôle perforée pour les séparer tout en maintenant la communication entre elles. Une plaque continue est encore disposée à l'arrière de l'empilement et une plaque perforée à l'avant : les ondes sonores entrent donc dans la première couche de cellules puis dans la seconde, ce qui améliore l'absorption du son. Cette structure est appelée un résonateur de Helmholtz à deux degrés de liberté, dont un exemple est montré dans le document US-A- 4 265 955. En variante, la tôle perforée de séparation peut être remplacée par un tissu métallique qu'on colle entre les couches de cellules ou à une tôle ajourée qui les sépare.

Un inconvénient de ces structures plus complexes provient de ce que les assemblages de couches de cellules et de tôles ou de tissu sont généralement fragiles et parfois difficiles à réaliser de façon satisfaisante ; et comme on est souvent obligé de courber ou de déformer d'une manière quelconque les panneaux avant de pourvoir les utiliser dans des appareils, il apparaît des contraintes de cisaillement, qui sont plus importantes à l'intérieur du panneau qu'à sa surface, ce qui explique qu'il se déchire volontiers à ces interfaces entre couches de cellules ; la situation est encore aggravée si la flexion est accompagnée de traction ou de compression et si elle s'exerce autour des deux directions de longueur et de largeur, ou si l'interface des couches n'est pas placée à mi-épaisseur de la structure, car la ligne neutre des contraintes est à l'écart de l'interface, qui est alors encore plus chargée.

On peut éviter ces inconvénients en déformant séparément les couches de cellules, puis en les assemblant, ce qui élimine les contraintes de cisaillement aux interfaces, mais l'ajustement des couches de cellules est encore plus compliqué et il faut s'assurer que le formage est mené avec suffisamment de précision pour permettre cet ajustement.

Selon l'enseignement du document FR-A-2 261 872, la tôle métallique par laquelle les couches de cellules sont traditionnellement séparées est remplacée par des plaquettes initialement pliées qui permettent d'obtenir des couches successives de cellules sans raidir beaucoup la structure et donc faire apparaître ni recevoir des contraintes importantes. En effet, les plaquettes de séparation des cellules peuvent être ici beaucoup plus fines que les tôles ou les tissus traditionnels car elles ne sont pas exposées à des risques de rupture à la fabrication ni plus tard, ne jouant aucun rôle d'assemblage de la structure.

L'objet de la présente invention est de definir une structure dont la fabrication est facilitée.

Sous sa forme la plus générale, l'invention concerne ainsi une structure composée de feuilles principales, sinueuses et unies alternativement par des bords droits à deux feuilles principales voisines et opposées en délimitant des cellules à section hexagonale, chaque cellule étant divisée en deux parties par une membrane, caractérisée en ce qu'elle comprend des feuilles intermédiaires aux feuilles principales, pliées et unies à des bords droits de deux feuilles principales voisines en formant des membranes à pli cassé dans les cellules.

Les feuilles intermédiaires peuvent être poreuses, perforées ou continues, souples, semi-rigides ou composites, en tôle mince, en tissu, etc. Plusieurs exemples convenant à la construction de résonateurs de Helmholtz seront donnés.

L'invention se rapporte aussi à un procédé de fabrication d'une telle structure, consistant à plier longitudinalement les feuilles intermédiaires pour y former deux lèvres séparées par un pli, à empiler alternativement les feuilles principales et intermédiaires tout en unissant des premières facettes des feuilles principales alternativement à deux feuilles principales voisines, à des endroits destinés à donner les bords droits, et des secondes facettes, opposées aux premières facettes, des feuilles principales à des portions de feuilles intermédiaires, lesdites portions appartenant à une unique lèvre parmi les deux lèvres et étant distantes du pli.

Les principaux modes de réalisation envisagés actuellement pour cette invention seront maintenant décrits plus en détail à l'aide des figures suivantes :

- la figure 1 représente un résonateur de Helmholtz,
- la figure 2 est une vue en perspective de la structure en nid d'abeille proposée ici,
- la figure 3 est une vue isolée des feuilles de séparation de cellules, caractéristiques d'une réalisation de l'invention,
- la figure 4 illustre un résonateur de Helmholtz à plusieurs degrés de liberté,
- les figures 5 et 6 représentent l'élément caractéristique d'une autre réalisation de l'invention, avant et après l'ouverture des cellules,
- et les figures 7, 8 et 9 représentent trois réalisations supplémentaires de l'invention.

Un résonateur de Helmholtz dans lequel l'invention peut trouver emploi consiste donc en une plaque formée d'une tôle perforée 1 à l'avant, une plaque formée d'une tôle pleine 2 à l'arrière, et une couche de nid d'abeille 3, formée de feuilles principales 4 de clinquant minces séparant des cellules 5, intercalée entre ces tôles.

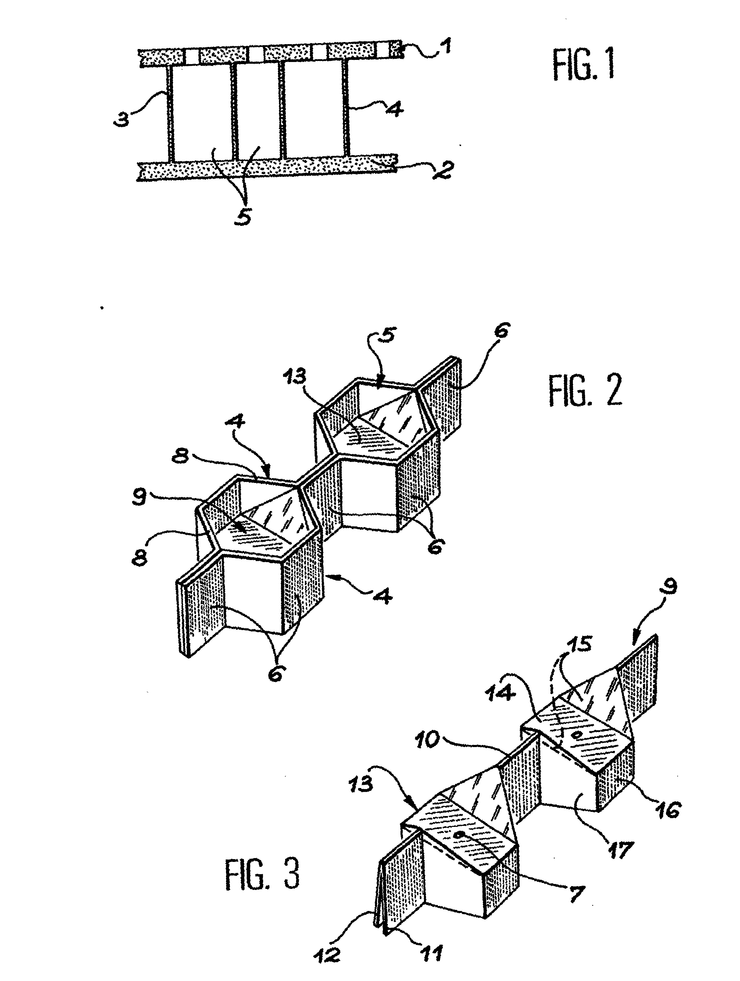

La figure 2 illustre deux de ces feuilles principales 4 de clinquant qui sont voisines : elles s'étendent en lignes brisées, à bords droits 6 alternant avec des bords obliques 8, et sont jointes et collées entre elles à un bord droit sur deux 6 tout en étant jointes à d'autres feuilles principales 4 voisines mais non représentées aux autres bords droits 6 ; une cellule 5 s'étend entre deux bords droits 6 de deux feuilles principales 4 voisines.

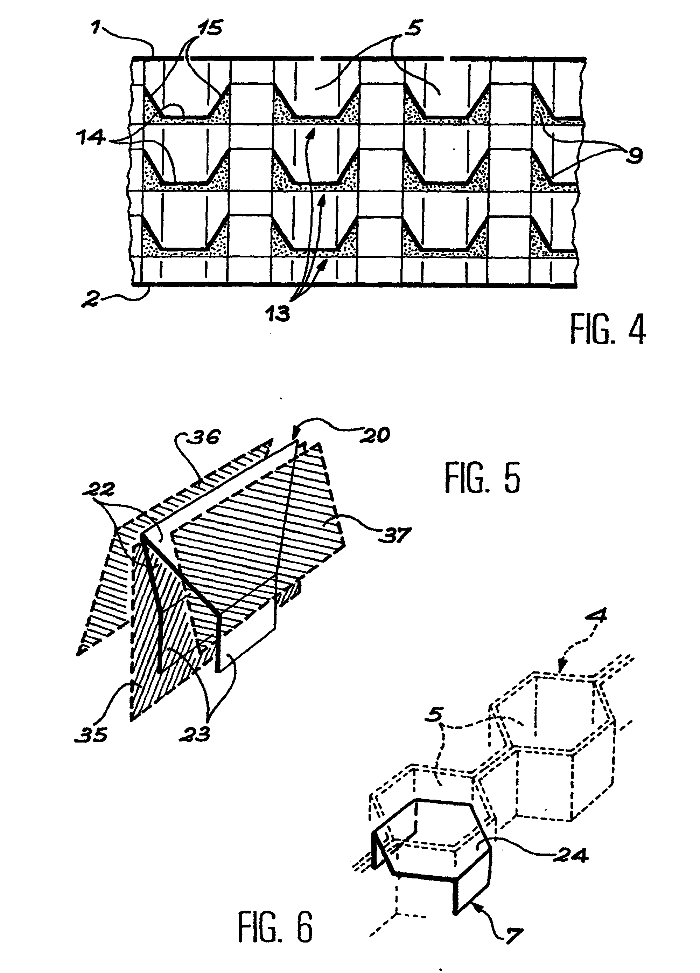

On voit plus clairement à la figure 3 des feuilles intermédiaires 9 qu'on a ajoutées aux feuilles principales 4 en alternance avec elles, chaque feuille 9 étant située entre deux feuilles principales 4 voisines. Ces feuilles intermédiaires 9 sont pliées ; le pli 10 est intact à l'emplacement des bords droits 6 joints entre eux, de sorte que les feuilles intermédiaires 9 se présentent à cet endroit sous forme de deux lèvres 11 et 12 jointives, mais il est cassé ailleurs et les feuilles intermédiaires 9 s'étalent dans les cellules 5 en formant en particulier des membranes 13 qui séparent les lèvres 11 et 12 et obturent les cellules 5 en les divisant en deux parties. Bien que d'autres formes que celle-ci soient possibles et que le procédé de fabrication ne permette pas toujours d'obtenir des formes aussi nettes, on peut distinguer sur les membranes 13 une portion plate 14 rectangulaire et située entre les bords droits 6, et deux portions inclinées 15 triangulaires s'étendant entre les bords obliques 8 de part et d'autre de la portion plate 14 et s'élevant vers les bords droits 6 joints entre eux. Les feuilles intermédiaires 9 comprennent encore des pans verticaux 16 collés aux bords droits 6, et 17 s'étendant devant les bords obliques 8. Enfin, au moins un orifice 7 est opéré à travers chaque membrane 13.

Les membranes 13 ont pour but de compartimenter les cellules 5 en jouant le rôle de la tôle intermédiaire de séparation de couches de nid d'abeille connue dans l'art antérieur. Si la structure est employée comme absorbeur acoustique par résonance, les membranes 13 sont perforées ou poreuses pour laisser l'air communiquer entre les deux parties des cellules 5. Elles peuvent être en un matériau souple (c'est-à-dire qui se déforme sous l'action de forces même petites) ou semirigide (c'est-à-dire qui se déforme seulement sous l'action de forces plus importantes, nécessaires par exemple pour ouvrir les cellules 5 en tirant latéralement sur les feuilles de clinquant 4, qui sont droites à l'origine). On peut utiliser de fines tôles métalliques de clinquant, des tissus métalliques, des treillis métalliques, une membrane souple, des feuilles préimprégnées de résine, etc. Les proportions des portions plate 14 et inclinées 15 ne sont pas critiques, pas plus que la position en hauteur des membranes 13 dans les cellules 5 ; de plus, le pli 10 peut être orienté vers l'une ou l'autre des deux tôles 1 et 2.

L'agencement peut être compliqué en disposant plusieurs feuilles intermédiaires 9 superposées et qui forment autant de membranes 13 dans les cellules 5, comme cela est représenté à la figure 4. On obtient alors un résonateur de Helmholtz à trois degrés de liberté ou plus.

Le procédé de fabrication peut être intégré à un procédé classique de fabrication de structure en nid d'abeille : au lieu d'empiler directement les feuilles principales 4 les unes sur les autres, on intercale entre elles les feuilles intermédiaires 9, qui sont alors des feuilles pliées longitudinalement pour former les lèvres 11 et 12, le pli 10 étant continu. De la colle est déposée sur les parties des feuilles principales 4 qui formeront les bords droits 6, alternativement sur une face et sur l'autre, pour les unir entre elles, ainsi qu'aux parties des lèvres 11 et 12 des feuilles intermédiaires 9 à ces endroits.

De la colle est aussi déposée sur les feuilles principales 4 devant les portions des feuilles intermédiaires 9 qui formeront les pans verticaux 16. Quand les feuilles 4 et 9 ainsi encollées ont été empilées et pressées, et que la colle a séché, une traction latérale sur l'empilement des feuilles 4 et 9 ouvre les cellules 5 et y aplatit les feuilles intermédiaires 9 en cassant les plis 10, ce qui forme les membranes 13.

Bien des variantes de fabrication sont possibles, à commencer par celles qu'on trouve déjà dans l'art de la fabrication des nids d'abeille. On peut en particulier utiliser des matériaux composites qu'on durcit par une cuisson. Si d'autres part les feuilles intermédiaires 9 sont imperméables à la colle, les lèvres 11 et 12 doivent aussi être encollées pour adhérer l'une à l'autre aux endroits des bords droits 6 ; si elles sont perméables, poreuses ou préimprégnées de résine, des feuilles de séparation devront être glissées sur les deux faces des lèvres 11 et 12, au moins sur et sous les endroits qui donneront les membranes 13, pour éviter toute adhérence à cet endroit, ainsi qu'entre les lèvres 11 et 12 aux endroits des pans verticaux 16 et 17 ; ces feuilles non adhésives seront retirées quand les cellules 5 auront été ouvertes.

Les pans verticaux 17 peuvent adhérer ou non aux bords obliques 8 des feuilles principales 4, selon qu'ils ont été enduits de colle ou non ; dans l'affirmative, la structure sera plus rigide. Si les feuilles intermédiaires 9 sont en tissu souple, elles pourront être enduites de résine durcissable aux membranes 13 après l'ouverture de la structure, afin encore de raidir celle-ci.

D'autres modes de réalisation vont maintenant être décrits. Chaque feuille intermédiaire 9 en bande continue peut ainsi être remplacée par des éléments isolés dont l'un d'entre eux est représenté à la figure 5 sous la référence 20. Cet élément 20 comprend aussi un pli 21, et ses deux moitiés sont symétriques par rapport à la ligne de pli. Leur forme est complexe et composée d'un trapèze 22, les deux trapèzes 22 se joignant par leurs grandes bases à l'endroit du pli 21, et d'un rectangle 23 joint à la petite base du trapèze 22. Les rectangles 23 sont destinés à être collés à un bord droit 6 unique et respectif de la même façon que précédemment. Quand on ouvre les cellules 5, les deux trapèzes 22 s'aplatissent en un hexagone régulier, par cassure du pli 21, qui donne donc une membrane 24 plate, illustrée à la figure 6, obturant une des cellules 5. Cette réalisation permet une construction plus soignée, sans qu'on ait à se préoccuper d'irrégularités de plissement comme précédemment, mais au prix d'une difficulté plus grande de mise en forme. La figure 5 illustre aussi une feuille anti-adhésive 35 glissée entre les lèvres du pli 21 (les moitiés de l'élément 20) et deux autres, 36 et 37, qui couvrent entièrement les trapèzes 22 ; ces feuilles 35 à 37 ne sont utiles, comme on l'a signalé plus haut, que si les éléments 20 sont perméables à la colle ou enduits de résine ; elles sont ôtées ou tombent quand la structure du nid d'abeille a été parachevée par l'ouverture des cellules 5.

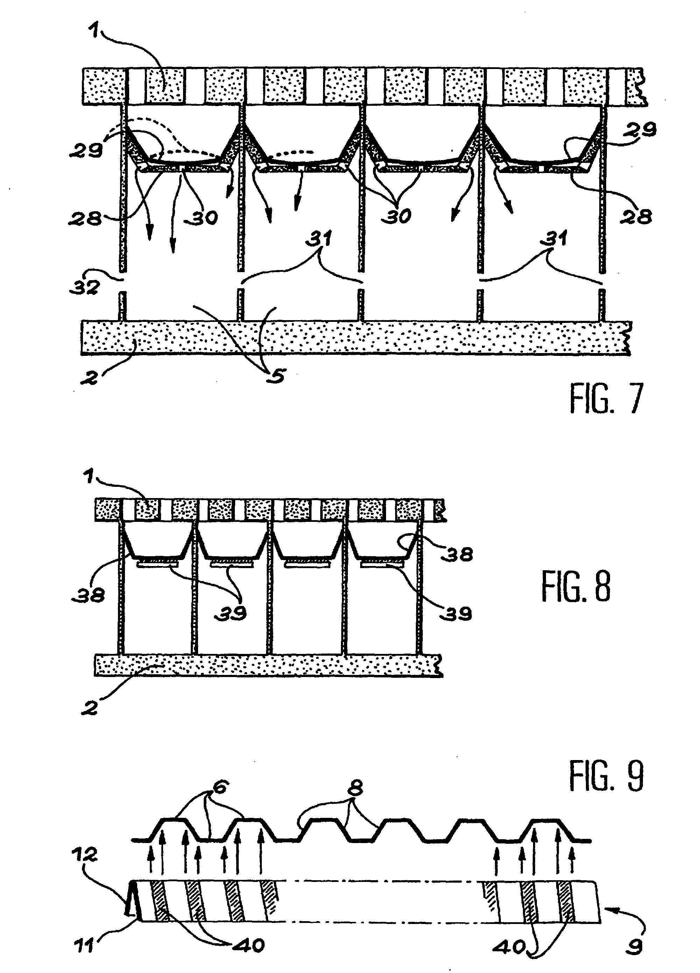

Les feuilles intermédiaires peuvent aussi être composites. Un exemple est illustré à la figure 7, qui montre que les membranes qu'elles forment peuvent comprendre une armature semi-rigide 28 et une feuille souple 29. Celle-ci est du côté de la tôle perforée 1 et est donc exposée aux variations de pression dues aux vibrations acoustiques. Elle se déforme donc en battant devant l'armature 28, qui est évidée de trous 30 permettant le passage de l'air à l'intérieur de la cellule 5 en réponse aux battements de la feuille souple 29: un amortissement supplémentaire des vibrations est obtenu par cette circulation d'air à travers les trous 30.

Au moins dans cette réalisation particulière, il peut être utile d'avoir percé les feuilles 4 principales pour faire communiquer les cellules 5 entre elles par des orifices 31, afin d'y égaliser la pression du côté de la plaque continue 2. D'autres orifices 32 peuvent être ménagés avec l'extérieur, pour égaliser la pression dans toutes les cellules 5, de part et d'autre des membranes, ou au contraire pour insuffler une pression différente.

Les ondes sonores frappant la feuille souple 29 n'ont donc pas ici la possibilité de la traverser pour se répandre et se dissiper dans la seconde partie de la cellule 5 : cette structure n'est plus un résonateur, mais un dissipateur d'énergie acoustique dont la fonction est donc semblable. De façon plus générale, un dissipateur peut ne comprendre que la feuille souple 29 ; il peut aussi être combiné à un résonateur : en revenant à la construction de la figure 4, la dernière feuille intermédiaire 9, celle qui est la plus proche de la tôle pleine 2, pourrait être continue, les autres restant percées d'orifices pour laisser les ondes acoustiques les traverser.

Une autre variante de feuille composite apparaît à la figure 8 : la membrane est composée d'un substrat souple 38, réalisé à partir d'une feuille continue telle que 9 ou d'un élément isolé tel que 20, et d'une pastille plus rigide 39, collée sur le substrat et circonscrite par la membrane, et qui a pour effet de l'alourdir et d'aider ainsi à la dissipation. Une autre variante encore, illustrée sur la figure 9, est réservée à des feuilles continues telles que 9 et consiste à épaissir celles-ci aux endroits destinés à faire face aux bords obliques 7. Pour cela, des bandes de renfort 40 peuvent être collées aux lèvres 11 et 12 aux endroits voulus.

La hauteur de collage des lèvres 11 et 12 (aux pans verticaux 16) peut être proche de

$$(h-\frac{\sqrt{3}}{2}a),$$

où a désigne la longueur de côté des hexagones formant les cellules 5 et h la hauteur des cellules 5.

## Revendications

1. Structure composée de feuilles principales (4), sinueuses et unies alternativement par des bords droits (6) à deux feuilles principales (4) voisines et opposées en délimitant des cellules (5) à section hexagonale, chaque cellule étant divisée en deux parties par une membrane, **caractérisée en ce qu'**elle comprend des feuilles intermédiaires (9, 20) aux feuilles principales (4), pliées et unies à des bords droits (6) de deux feuilles principales voisines en formant des membranes à pli (10, 21) cassé dans les cellules (5).

2. Structure selon la revendication 1, **caractérisée en ce que** les feuilles intermédiaires sont poreuses ou perforées (7).

3. Structure selon l'une quelconque des revendications 1 ou 2, **caractérisée en ce que** les feuilles intermédiaires sont souples.

4. Structure selon la revendication 3, **caractérisée en ce que** les feuilles intermédiaires sont en tissu.

5. Structure selon la revendication 1, **caractérisée en ce que** les feuilles intermédiaires sont composites.

6. Structure selon la revendication 5, **caractérisée en ce que** les feuilles intermédiaires comprennent une couche souple (29) et une couche semi-rigide (28), la couche souple étant continue, la couche semi-rigide étant perforée, les couches n'étant pas unies.

7. Structure selon la revendication 5, **caractérisée en ce que** les feuilles intermédiaires comprennent un substrat (38) et des pastilles (39) plus rigides que le substrat, les pastilles étant disposées seulement aux membranes.

8. Structure selon les revendications 3 et 6, **caracté-**

**risée en ce que** les feuilles intermédiaires comprennent des portions raidies (40) aux membranes à pli cassé.

9. Structure selon la revendication 8, **caractérisée en ce que** les parties raidies (40) s'étendent entre des bords obliques (8), qui alternent avec les bords droits (6), des feuilles principales (9).

10. Structure selon l'une quelconque des revendications 1 à 9, **caractérisée en ce que** chacune des cellules comprend une pluralité des membranes à pli cassé (13), étagées et provenant d'autant de feuilles intermédiaires (9).

11. Structure selon l'une quelconque des revendications 1 à 10, **caractérisée en ce que** les feuilles intermédiaires (9) sont aussi longues que les feuilles principales (4).

12. Structure selon l'une quelconque des revendications 1 à 10, **caractérisée en ce que** les feuilles intermédiaires (20) s'étendent dans une seule cellule et sont unies à un seul bord droit (6) de deux feuilles principales voisines.

13. Structure selon la revendication 12, **caractérisée en ce que** les feuilles intermédiaires comprennent deux moitiés symétriques jointes par un pli (21), chacune des moitiés étant composée d'un trapèze (22) à la grande base située au pli et d'un rectangle (23) à un côté joint à la petite base du trapèze.

14. Structure selon l'une quelconque des revendications 1 à 12, **caractérisée en ce que** les feuilles intermédiaires (9) sont aussi unies à des bords obliques (8), alternant avec les bords droits (6), des feuilles principales voisines.

15. Structure selon l'une quelconque des revendications précédentes, **caractérisée en ce qu'**elle comprend encore une tôle continue jointe à un bord des cellules et une tôle perforée (2) jointe à un bord opposé des cellules (5).

16. Structure selon la revendication 15, **caractérisée en ce que** les feuilles (4) sont perforées (31) en faisant communiquer les cellules (5) mutuellement entre les membranes à pli cassé (13) et la tôle continue (2).

17. Procédé de fabrication d'une structure conforme à l'une quelconque des revendications précédentes, consistant à plier longitudinalement les feuilles intermédiaires pour y former deux lèvres (11, 12) séparées par un pli (10, 21), à empiler alternativement les feuilles principales (4) et intermédiaires (9, 20) tout en unissant des premières facettes de feuilles principales alternativement à deux feuilles principales voisines, à des endroits destinés à donner les bords droits (6), et des secondes facettes, opposées aux premières facettes, des feuilles principales (4) à des portions (16) de feuilles intermédiaires, lesdites portions (16) appartenant à une unique lèvre parmi les deux lèvres (11, 12) et étant distantes du pli.

18. Procédé de fabrication d'une structure selon la revendication 17, **caractérisé en ce que** des feuilles anti-adhésives (35, 36, 37) sont au préalable introduites sur et sous certaines portions des feuilles intermédiaires pliées et entre certaines portions des lèvres, puis retirées quand les cellules ont été ouvertes.

19. Procédé de fabrication d'une structure selon l'une quelconque des revendications 17 et 18, **caractérisé en ce qu'**il comprend une étape finale de cuisson de la structure.

**Patentansprüche**

1. Struktur, bestehend aus gewellten Hauptfolien (4), die über geradlinige Ränder (6) abwechselnd mit benachbarten und gegenüberliegenden Hauptfolien (4) verbunden sind, wobei sie Zellen (5) mit hexagonalem Querschnitt bestimmen, wobei jede Zelle durch eine Membran in zwei Teile unterteilt ist, **dadurch gekennzeichnet, daß** zwischen den Hauptfolien (4) Zwischenfolien (9, 20) vorgesehen sind, die gefaltet und mit geradlinigen Rändern (6) zweier benachbarter Hauptfolien verbunden sind, wobei sie innerhalb der Zellen (5) Membranen mit Bruchfalte (10, 21) bilden.

2. Struktur nach Anspruch 1, **dadurch gekennzeichnet, daß** die Zwischenfolien porös oder perforiert sind (7).

3. Struktur nach einem der Ansprüche 1 oder 2, **dadurch gekennzeichnet, daß** die Zwischenfolien nachgiebig sind.

4. Struktur nach Anspruch 3, **dadurch gekennzeichnet, daß** die Zwischenfolien aus Gewebe bestehen.

5. Struktur nach Anspruch 1, **dadurch gekennzeichnet, daß** die Zwischenfolien zusammengesetzt sind.

6. Struktur nach Anspruch 5, **dadurch gekennzeichnet, daß** die Zwischenfolien eine nachgiebige Schicht (29) und eine halbsteife Schicht (28) aufweisen, wobei die nachgiebige Schicht durchlaufend ist, die halbsteife Schicht perforiert ist und die Schichten nicht miteinander verbunden sind.

**7.** Struktur nach Anspruch 5, **dadurch gekennzeichnet, daß** die Zwischenfolien ein Substrat (38) aufweisen sowie Plättchen (39), die steifer sind als das Substrat, wobei die Plättchen nur an den Membranen angeordnet sind.

**8.** Struktur nach Anspruch 3 und 6, **dadurch gekennzeichnet, daß** die Zwischenfolien an den Membranen mit Bruchfalte verstärkte Abschnitte (40) aufweisen.

**9.** Struktur nach Anspruch 8, **dadurch gekennzeichnet, daß** die verstärkten Abschnitte (40) sich zwischen schrägen Rändern (8) der Hauptfolien (9) erstrecken, die mit den geradlinigen Rändern (6) abwechseln.

**10.** Struktur nach einem der Ansprüche 1 bis 9, **dadurch gekennzeichnet, daß** jede der Zellen eine Mehrzahl von Membranen (13) mit Bruchfalte aufweist, die in Stufen angeordnet sind und aus ebenso vielen Zwischenfolien hervorgehen.

**11.** Struktur nach einem der Ansprüche 1 bis 10, **dadurch gekennzeichnet, daß** die Zwischenfolien (9) ebenso lang sind wie die Hauptfolien (4).

**12.** Struktur nach einem der Ansprüche 1 bis 10, **dadurch gekennzeichnet, daß** die Zwischenfolien (20) sich in nur einer Zelle erstrecken und nur mit einem geradlinigen Rand (6) zweier benachbarter Hauptfolien verbunden sind.

**13.** Struktur nach Anspruch 12. **dadurch gekennzeichnet, daß** die Zwischenfolien zwei symmetrische, über eine Falte (21) verbundene Hälften aufweisen , wobei jede der Hälften aus einem Trapez (22), dessen große Basis an der Falte liegt, und einem Rechteck (23) zusammengesetzt ist, das mit einer Seite mit der kleinen Basis des Trapezes verbunden ist.

**14.** Struktur nach einem der Ansprüche 1 bis 12, **dadurch gekennzeichnet, daß** die Zwischenfolien (9) außerdem mit schrägen Rändern (8) der Hauptfolien verbunden sind, die mit den geradlinigen Rändern (6) abwechseln.

**15.** Struktur nach einem der vorhergehenden Ansprüche, **dadurch gekennzeichnet, daß** sie außerdem ein durchlaufendes Blech aufweist, das mit einem Rand der Zellen verbunden ist, sowie ein perforiertes Blech (1), das mit einem entgegengesetzten Rand der Zellen (5) verbunden ist.

**16.** Struktur nach Anspruch 15, **dadurch gekenn-**

**zeichnet, daß** die Folien (4) perforiert sind (31) und dadurch eine wechselseitige Verbindung der Zellen (5) zwischen dem Membranen (13) mit Bruchfalte und dem durchlaufenden Blech herstellen.

**17.** Verfahren zur Herstellung einer Struktur nach einem der vorhergehenden Ansprüche, das darin besteht, die Zwischenfolien longitudinal zu falten, um dort zwei durch eine Falte (10, 21) getrennte Lippen (11, 12) zu bilden, Hauptfolien (4) und Zwischenfolien (9, 20) im Wechsel zu stapeln und dabei erste Facetten der Hauptfolien an Stellen, die die geradlinigen Ränder ergeben sollen, abwechselnd mit benachbarten Hauptfolien zu verbinden, und den ersten Facetten entgegengesetzte zweite Facetten der Hauptfolien (4) mit Abschnitten (16) von Zwischenfolien zu verbinden, wobei diese Abschnitte (16) einer einzigen der beiden Lippen (11, 12) angehören und Abstand von der Falte haben.

**18.** Verfahren zur Herstellung einer Struktur nach Anspruch 17, **dadurch gekennzeichnet, daß** zuvor auf und unter bestimmten Abschnitten der gefalteten Zwischenfolien und zwischen bestimmten Abschnitte der Lippen Antihaftfolien (35, 36, 37) eingebracht und dann zurückgezogen werden, wenn die Zellen geöffnet wurden.

**19.** Verfahren zur Herstellung einer Struktur nach einem der Ansprüche 17 und 18, **dadurch gekennzeichnet, daß** es eine abschließende Stufe umfaßt, in der die Struktur gebrannt wird.

**Claims**

**1.** Structure composed of sinuous, main sheets (4) alternately joined by straight edges (6) to two opposite, neighbouring main sheets (4), thereby delimiting cells (5) with hexagonal cross section, each cell being divided into two parts by a membrane, **characterized in that** it comprises intermediate sheets (9, 20) with the main sheets (4), folded and joined to straight edges (6) of two neighbouring main sheets, thereby forming broken-fold membranes (10, 21) in the cells (5).

**2.** Structure according to Claim 1, **characterized in that** the intermediate sheets are porous or perforated (7).

**3.** Structure according to either of Claims 1 or 2, **characterized in that** the intermediate sheets are flexible.

**4.** Structure according to Claim 3, **characterized in that** the intermediate sheets are made of fabric.

**5.** Structure according to Claim 1, **characterized in that** the intermediate sheets are composite.

**6.** Structure according to Claim 5, **characterized in that** the intermediate sheets comprise a flexible layer (29) and a semi-rigid layer (28), the flexible layer being continuous, the semi-rigid layer being perforated, the layers not being joined.

**7.** Structure according to Claim 5, **characterized in that** the intermediate sheets comprise a substrate (38) and patches (39) which are more rigid than the substrate, the patches being arranged only at the membranes.

**8.** Structure according to Claims 3 and 6, **characterized in that** the intermediate sheets comprise stiffened portions (40) at the broken-fold membranes.

**9.** Structure according to Claim 8, **characterized in that** the stiffened parts (40) extend between oblique edges (8), which alternate with the straight edges (6), of the main sheets (9).

**10.** Structure according to any one of Claims 1 to 9, **characterized in that** each of the cells comprises a plurality of broken-fold membranes (13), which are tiered and originate from as many intermediate sheets (9).

**11.** Structure according to any one of Claims 1 to 10, **characterized in that** the intermediate sheets (9) are as long as the main sheets (4).

**12.** Structure according to any one of Claims 1 to 10. **characterized in that** the intermediate sheets (20) extend in a single cell and are joined to a single straight edge (6) of two neighbouring main sheets.

**13.** Structure according to Claim 12, **characterized in that** the intermediate sheets comprise two symmetric halves connected by a fold (21), each of the halves being composed of a trapezium (22) with the large base situated at the fold and of a rectangle (23) with a side connected to the small base of the trapezium.

**14.** Structure according to any one of Claims 1 to 12, **characterized in that** the intermediate sheets (9) are also joined to oblique edges (8), alternating with the straight edges (6), of the neighbouring main sheets.

**15.** Structure according to any one of the preceding claims, **characterized in that** it further comprises a continuous lamina connected to an edge of the cells and a perforated lamina (2) connected to an opposite edge of the cells (5).

**16.** Structure according to Claim 15, **characterized in that** the sheets (4) are perforated (31), thereby making the cells (5) communicate mutually between the broken-fold membranes (13) and the continuous lamina (2).

**17.** Process for manufacturing a structure in accordance with any one of the preceding claims, consisting in folding the intermediate sheets longitudinally so as to form therein two lips (11, 12) separated by a fold (10, 21), in alternately stacking the main (4) and intermediate (9, 20) sheets while joining first facets of main sheets alternately to two neighbouring main sheets, at sites intended to give the straight edges (6), and second facets, opposite the first facets, of the main sheets (4) to portions. (16) of intermediate sheets, the said portions (16) belonging to a single lip of the two lips (11, 12) and being distant from the fold.

**18.** Process for manufacturing a structure according to Claim 17, **characterized in that** anti-adhesive sheets (35, 36, 37) are previously introduced over and under certain portions of the folded intermediate sheets and between certain portions of the lips, then removed when the cells have been opened.

**19.** Process for manufacturing a structure according to any one of Claims 17 and 18, **characterized in that** it comprises a final step of baking the structure.

FIG. 1

FIG. 2

FIG. 3

FIG. 4

FIG. 5

FIG. 6

FIG. 7

FIG. 8

FIG. 9